# EUROPEAN PATENT APPLICATION

(11) **EP 0 856 818 A2**
(43) Date of publication of application: **05.08.1998**
(21) Application number: 97122744.2
(22) Date of filing: 23.12.1997
(51) Int. Cl.: G07F 7/10

(54) **Apparatus and method for accessing secured data stored in a portable data carrier**

(30) Priority: 30.01.1997 GB 9701883
(71) Applicant: MOTOROLA, INC., Schaumburg, IL 60196 (US)
(72) Inventor: Hill, Michael John, Coppet, Vaud 1296 (CH)
(74) Representative: Gibson, Sarah Jane

(57) **Abstract**

A portable data carrier includes a secure processing element and a co-located directory. A memory element is substantially separated by the secure processing element and disposed within the portable data carrier. A secure processor command stemming from an operator input is then used to access a portion of the directory that includes an address key. The address key is then used to de scramble an address in the memory element, which address location includes a representation of the data record.

## Description

### Field of the Invention

The present invention relates generally to a portable data carrier designed for storing large amounts of data, and in particular to a method and apparatus for accessing secured data stored in such a portable data carrier.

### Background of the Invention

Portable data carriers (e.g., smart cards or chip cards) are known to include a plastic substrate in which a semiconductor device (i.e., integrated circuit--IC) is disposed for retaining digital data. This digital data may constitute program instructions, user information, or any combination thereof. Moreover, these smart cards are known to be operational in a contacted mode, whereby an array of contact points disposed on the plastic substrate and interconnected with the semiconductor device is used to exchange electrical signals between the chip card an external card reader, or terminal. Similarly, there exists smart cards that operate in a contactless mode, whereby a radio frequency (RF) receiving circuit is employed to exchange data between the card and a card terminal. That is, the card need not come into physical contact with the card terminal in order to exchange data therewith, but rather must simply be placed within a predetermined range of the terminal.

Additionally, there exist smart cards that are alternatively operational in either a contacted mode or a contactless mode. Such cards are equipped with both RF receiving circuitry (for contactless operations) as well as an array of contact pads (for contacted operations). These smart cards are commonly referred to as combination cards, or combi-cards. It should be noted that in both the contact-only card and the combi-card arrangements, the array of contact pads typically conform to the ISO Standard 7816, which standard is incorporated herein by reference.

One of the problems of prior art smart cards is the increasing need for additional memory for the storage of data records. That is, as the functional capabilities of these smart cards increase, so too does the requirement for storing data for access by the cardholder. Typically, the resident memory on the smart card integrated circuit (IC) is not large enough to store large amounts of data. Of course, mass memory cards (MMCs) are available today, and are small enough for use in a smart card application. However, information stored on such a stand-alone MMC will not be secure, as these MMCs typically do not have the level of security required for smart card applications.

The need for security in a smart card application is well established, and cardholders insist on having their smart card data secure from illicit access. By way of example, a cardholder's medical records, bank account numbers, credit information, and other valuable pieces of data may be stored on the smart card. In fact, stored value cards (i.e., cards that can be loaded with one or more types of currency for use by the cardholder in debit transactions) may be the best example of the special needs for security in smart card applications.

Accordingly, there exists a need for a method and apparatus for securely accessing large amounts of data stored on a smart card. In particular, a smart card that was able to advantageously employ a mass memory device, together with a secure access protocol would be an improvement over the prior art.

### Brief Description of the Drawings.

FIG. 1 shows a simplified block diagram of a smart card, in accordance with the present invention;
FIG. 2 shows a graphical representation of the secure directory shown in FIG. 1;
FIG. 3 shows a graphical representation of a portion of non-volatile memory, as shown in FIG. 1;
FIG. 4 shows a flow diagram depicting operation of the smart card access method, according to the present invention;
FIG. 5 shows a more detailed flow diagram depicting the record processing method, in accordance with the present invention; and
FIG. 6 shows a memory element that includes exemplary data records, in accordance with the present invention.

### Detailed Description a Preferred Embodiment.

The present invention encompasses a method and apparatus for secure access to a memory element that is substantially separated from a secure processing element of a smart card. The secure processing element includes a directory that is co-located therewith and accesses the directory in response to a secure processor command. Upon retrieving an address key, the address key is used to de scramble an address location that contains a representation of the data record being accessed. In this manner, a large, separated memory element can be used to securely store data by taking advantage of a secure access directory that is co-located with the secure processing element.

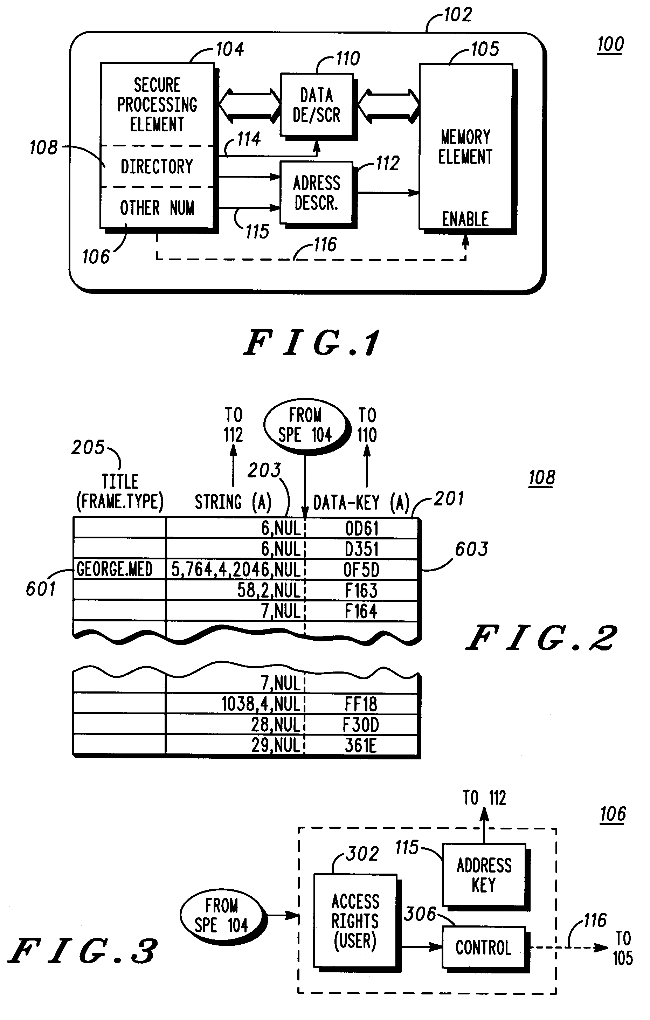

The present invention can be better understood with reference to FIGS. 1-6. FIG. 1 shows smart card 100 that includes a substrate 102 within which is disposed a secure processing element 104 and a separate mass memory element 105. The secure processing element (SPE) 104, which may be a semiconductor device designed for smart card applications, is further co-located with a non-volatile memory 106 that includes a directory 108, according to the present invention. Because the directory 108 entries are kept in non-volatile memory, the present invention provides a security mechanism through which data records can be exchanged between the SPE and the memory element 105, as later described.

In accordance with a preferred embodiment of the present invention, a data scrambler/de-scrambler 110 is provided for exchanging data between the memory element 105 and the secure processing element 104. Additionally, an address de-scrambler 112 provides an interface between the directory 108 and the memory element 105, as later described. So-called cryptography keys 114, 115 are delivered to the cryptographic devices 110, 112 for use during scrambling/de-scrambling. It should be noted that the use of cryptography keys and cryptographic devices is known in the art, and is therefore not further described here. Control line 116 is generated by the secure processing element 104 and used as described with reference to FIG. 3. Thus, the smart card arrangement 100 shown in FIG. 1 advantageously employs the security features of a conventional smart card integrated circuit (IC), and a mass memory element 105, whose records can be accessed via a secure directory 108, according to the present invention.

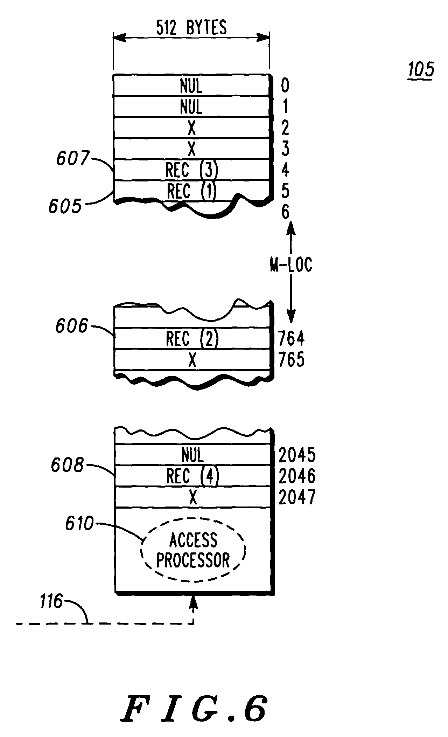

FIG. 2 shows a more detailed diagram depicting the secure directory 108 shown in FIG. 1. A plurality of data keys 201 are stored, whereby a unique data key is used for each directory location, as shown and later described. According to the invention, these data keys are generated and maintained for each directory entry. This may be accomplished, for example, by driving a random number generator engine with a new seed each time a new directory entry is made. Similarly, a string array 203 is stored in the directory to indicate the beginning and end of a particular record string, as later described with reference to FIG. 6. It should be noted that the secure directory 108 may be sufficiently sized to accommodate large data key values as well as large string array values, thereby ensuring a high level security as will be appreciated by those skilled in the art. Regarding size, the directory may be anywhere between 128 bytes and 64 kbytes, or even larger as memory technology advances, depending on the application.

The directory title field 205 identifies, e.g., a filename and file type, the kind of information stored in the corresponding directory location. It is noted that the string array 203 may comprise a single directory location or multiple locations, depending on the length of the record string being accessed. It is further noted that the values noted in FIG. 2 are representative only, and should not be considered limitations of the present invention, but should be considered for illustration only. As indicated, the secure directory 108 is under the control of SPE 104 via a processing command, as later described.

SPE 104 also controls the non-volatile memory 106, as shown in FIG. 3. User access rights are maintained in a section 302, while address keys 115 are stored in a section 304 of the non-volatile memory. In a preferred embodiment, the same address key (generated by the SPE at initiation in a similar manner as the data keys 114) is used for each directory entry. However, it should be apparent that there could be a unique address key for each directory location (as with the data keys 201), but this would require additional memory for the directory 108. The access rights constitute an access code for each user specifying, e.g., the read/write/erase capabilities for that user, and are inputted to control block 306. The control signal 116 is then generated to enable the memory element 105, as later described.

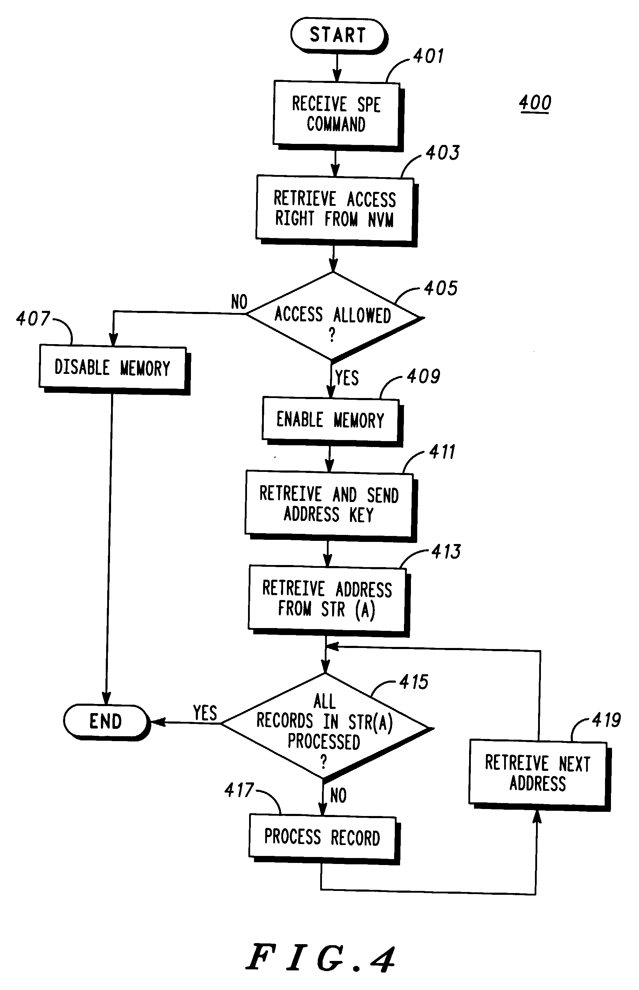

FIG.4 shows a flow diagram 400 depicting the data access routine, in accordance with the present invention. To begin the process, an SPE command is received (401) by the smart card. Such an SPE command might include at least the type of operation required (read/write/erase), and a user/operator identification and/or authentication code. The access rights for that operator are retrieved (403) from the non-volatile memory. It should be noted that the access rights (i.e., stored in non-volatile memory) control whether or not the operator will be able to modify the data records stored on the smart card. Storing these access rights in non-volatile memory provides a first tier of security for the stored data. Moreover, conventional authentication procedures can be used to allow only authorized operator access to data on a particular smart card.

After the type of operation and user identification is determined, a decision (405) is then reached to determine whether or not access has been allowed. If the type of access requested is not allowed (e.g., a patient requesting to erase medical records) the memory element 105 (shown in FIG. 1) is disabled (407), and the routine is exited. If access is allowed, the memory element is enabled (409) using the control line 116 shown in FIG. 1. The address key is then retrieved (411) and sent to the address de-scrambler 112 for use in decrypting the encrypted address data. The secure processing element 104 then retrieves (413) the first address from the array string corresponding to the secure directory location, as later described. A processing loop is then entered, whereby the records are processed (417) for each address retrieved (419) from the record string, as determined by loop control block (415). In a preferred embodiment, the presence of a NUL string, as shown in FIG. 2, determines the end of the string array. In this manner, the data records stored in memory element 105 can be sequentially processed, as next described.

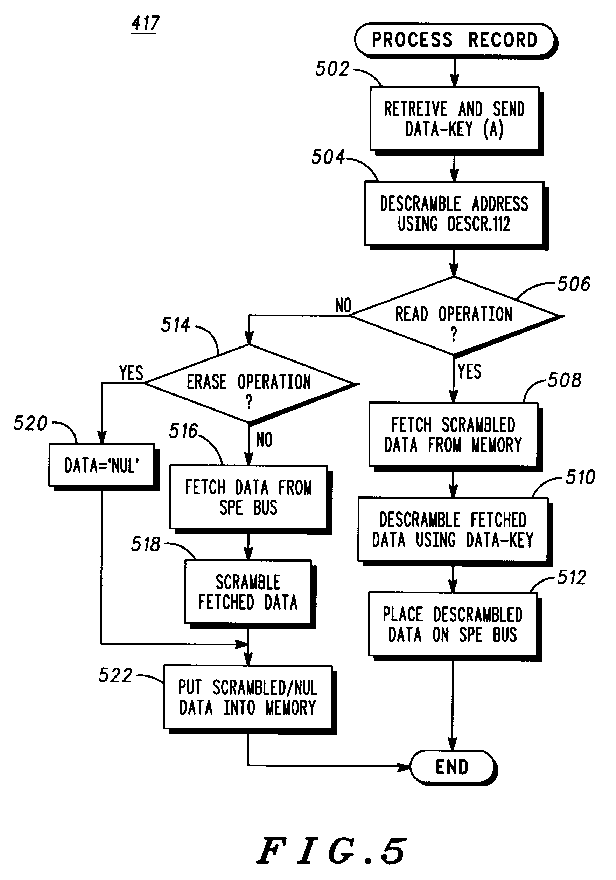

FIG. 5 shows a more detailed flow diagram depicting the record processing method, according to the present invention. The data key corresponding to the directory location 'A' is first retrieved (502) and sent to the data scrambler/de-scrambler device 110. The address de-scrambler 112 is then used to de scramble (504) the memory element address using the address decryption key stored in non-volatile memory section 304 shown in FIG. 3. In a preferred embodiment, the foregoing steps are employed for each type of operation, whether they are read, write, or erase operations. Similarly, the following steps are taken in response to the type of operation requested by the operator, which operation has already been authorized.

A decision is reached (506) to determine whether or not the intended operation is a READ operation. If the operation is a READ operation, the scrambled data is fetched (508) from the memory location corresponding to the address found in the string array. Next, the fetched data is de-scrambled (510) using the data key retrieved (step 502 above) and using the data de-scrambler 110. Lastly, the de-scrambled data is placed (512) onto the data bus for processing by the secure processing element 104, before the routine is exited.

If it is determined at step 506 that a READ operation is not intended, a decision (514) is reached to determine whether or not the intended operation is an ERASE operation. If not, meaning that the intended operation is a WRITE operation, data is fetched (516) from the SPE bus and scrambled (518) using the appropriate data key, as earlier described. If the intended operation is an ERASE operation, NUL data (e.g, all zeroes, or all ones) is presented to the memory. In either case, the data (scrambled or NUL) is then put (522) into the memory location corresponding to the de-scrambled address, as earlier determined, before the routine is exited. In the foregoing manner, records stored in memory element 105 can be processed in a secure manner by relying on the security features of the secure processing element and non-volatile memory 106 (including the directory 108).

In order to better illustrate the preferred embodiment of the invention, an example is provided using FIG. 6 and FIG. 2 as follows:
it is assumed that memory element 105 appears generally as illustrated in FIG. 6, and is preferably 512 bytes wide and 2048 records in length. In this example, no data records (which may indicate erased or initialized record states) are shown in memory locations 0, 1, and 2045. Likewise, a "don't care" value ("X") is shown in locations 2, 3, 765 and 2047, as these records are not accessed in the example given. According to the example, a data record to be accessed is distributed across four non-contiguous memory locations. Referring now to FIG. 2, directory location 601 comprises a string array that includes address location 5, 764, 4, and 2046 followed by a NUL value to thereby represent the locations in which the desired information is stored. Similarly, directory location 603 shows the data key value of 05D. As earlier noted the data keys can be any size, but the exemplary is 4 bytes.

Referring again to FIG. 6, it is noted that the record of interest is stored sequentially in memory locations 605-608, as shown. Correspondingly , the sequence of these memory locations (i.e., the sequence needed to place the full record in proper order) is given in directory location 601 shown in FIG. 2. In particular, a first segment of the record--REC(1)--is shown in memory location 605. Similarly REC(2)-REC(4) are stored in memory locations 606-608. In this manner, a series of scrambled address locations can be de-scrambled and used to retrieve non-contiguous portions of a larger data record. These portions can then be concatenated for use by the secure processing element (e.g., displayed on a terminal) for use by the operator of the smart card. This record may be, for example, a medical record that includes a doctor's name, and the last three visits made to the doctor. Lastly, an access processor 610 is included in the memory that is responsive to the control signal 116 to enable and disable the memory element 105, as earlier described.

Accordingly, the present invention allows for a multi-tiered security mechanism that can be used in smart card applications. Moreover, a mass memory element can be advantageously employed to store many data records in a secure fashion.

## Claims

1. In a portable data carrier that includes a secure processing element having a directory that is co-located with the secure processing element, the portable data carrier further having a memory element that is substantially separated from the secure processing element, a method of accessing a data record stored in the memory element comprising the steps of:
receiving an operation command from a terminal, which operation command corresponds to a secure processor command;
accessing a portion of the directory using the secure processor command to thereby retrieve an address key; and
using the retrieved address key to descramble an address in the memory element, to produce a descrambled address location that contains a representation of the data record.

2. The method of claim 1, wherein the representation of the data record comprises a scrambled data record, further comprising the steps of:
retrieving a data key from the directory; and
using the retrieved data key to descramble the scrambled data record.

3. The method of claim 2, wherein the retrieved data key varies for each of a plurality of entries in the directory.

4. The method of claim 1, further comprising the step of determining whether a cardholder is authorized to access the data record.

5. The method of claim 5, further comprising the step of determining access rights of the cardholder, depending on an intended operation type.

6. In a portable data carrier that includes a secure processing element having a directory that is co-located with the secure processing element, the portable data carrier further having a memory element that is substantially separated from the secure processing element, a method of accessing a data record stored in the memory element comprising the steps of:
accepting an operation command from a terminal, which operation command corresponds to a secure processor command;
accessing a portion of the directory using the secure processor command to thereby retrieve a data key; and
using the retrieved data key to descramble a representation of the data record located in the memory element.

7. The method of claim 6, wherein the representation of the data record resides in a scrambled address location, further comprising the steps of:
retrieving an address key from a non-volatile memory portion of the secure processing element; and
using the retrieved address key to descramble the scrambled address location.

8. The method of claim 6, further comprising the step of determining access rights of a cardholder.

9. The method of claim 8, further comprising the step of determining whether the cardholder is authorized to access the data record.

10. A portable data carrier, comprising:
a secure processing element;
a directory co-located with the secure processing element;
a first descrambler, coupled to receive a key input from the directory; and
a memory element, located substantially apart from the secure processing element, coupled to exchange information with the first descrambler.

11. The portable data carrier of claim 10, wherein the first descrambler comprises an address descrambler, further comprising a data descrambler, coupled to exchange data between the memory element and the secure processing element.
